# EUROPEAN PATENT APPLICATION

(11) **EP 0 581 482 A1**
(43) Date of publication of application: **02.02.1994**
(21) Application number: 93305484.3
(22) Date of filing: 13.07.1993
(51) Int. Cl.: B29C 45/17

(54) **Injection molding method using void inducing pin and mold therefor**

(30) Priority: 14.07.1992 JP 209697/92; 07.06.1993 JP 136193/93
(71) Applicant: NIPPON STEEL CHEMICAL CO., LTD., Tokyo (JP)
(72) Inventor: Iizuka, Yoshinobu, Yokohama, Kanagawa-ken (JP); Aida, Hiroshi, Kawasaki-shi, Kanagawa-ken (JP); Sato, Hisamine, Kawasaki-shi, Kanagawa-ken (JP)
(74) Representative: Shindler, Nigel

(57) **Abstract**

A void inducing member 40 having a gas discharging part 44 formed to a shape whose sectional area is made smaller toward its acute top end is provided in a mold at at least one position corresponding to a cavity 30 defining the thick wall portion of a molded resin part 90. After the cavity 30 is filled with a resin melt 50 by full-shot injection, compressed gas is supplied from a gas supply source 60 through the gas discharging part 44 into the resin melt 50. The resin skin layer being formed in contact with the top end of the void inducing member 40 is easily broken through by the compressed gas, and fine gas bubbles serving as a void nucleus 51 are inserted into the resin melt 50. The void nucleus 51 is expanded to a void 52 having a size corresponding to the volumetric shrinkage of the resin melt 50. Since the growth of the void 52 compensates for the volumetric shrinkage of the resin melt 50, no defects such as sink marks are formed on the surface of an obtained resin part 90.

## Description

The present invention relates to an injection molding method for manufacturing a thermoplastic part with thick and thin wall portions without the formation of defects such as sink marks, which would be typically present on the surface especially of the thick wall sections. The present invention is also directed to a mold therefor and a void inducing member provided in the mold.

When a thermoplastic part with thick and thin wall portions is to be manufactured by injection molding, a resin melt injected into the cavity of a mold is cooled and solidified. During the cooling and solidifying period, the interior of the resin melt at a part corresponding to the thickwall portion solidifies last. The delay in the solidification causes the accumulation of volumetric shrinkage at the part corresponding to the thick wall portion, so that defects such as sink marks often form on the surface of the thick wall portion.

There have been proposed various methods to inhibit this kind of defect in the injection molding process. For instance, Japanese Patent Publication 61-53208, Japanese Patent Application Laid-Open 63-268611 and U.S. Patent 4923666 disclose the method wherein a thick wall portion is partially provided in a state communicating with a gate for the injection of a resin melt, and high-pressure gas is introduced through an injection nozzle or the injection gate into the injected resin melt.

The introduced high-pressure gas forms a cavity serving as a gas channel passing through the thick wall portion and hold the interior of the cavity at a high pressure. Consequently, the resin melt, while being pressed onto the inner surface of the mold by the high pressure from the cavity, is cooled and solidified. Thus, the outer surface layer of the resin melt is restricted by the inner surface of the mold, so as to inhibit the formation of defects such as sink marks on the surface of a molded resin part.

In this type of injection molding, it is difficult to control the flow and amount of high-pressure gas. In addition, a cavity is formed continuously extending through the thick wall portion of an obtained resin part. Although the cavity has the effect of making the resin part light in weight and reduces the amount of resin consumed, the toughness and strength of the obtained resin part are lowered by the cavity.

As for a nozzle for introducing compressed gas into the cavity of a mold, there is known a mechanism which merely reciprocatively carries a gas injection nozzle, and the high-pressure gas injecting device which is opened or closed with respect to the cavity of the mold by the motion of a needle sliding axially through a hollow pipe, as disclosed in Japanese Patent Publication 48-41264 and Japanese Patent Application Laid-Open 63-164222.

These compressed gas injection nozzles have the defect that a resin melt flows into the hollow pipe or seals an opening. In order to eliminate the defect, it is necessary to provide additional mechanism such as a cylinder device for sliding a nozzle body or a needle when the cavity of the mold is filled with the injected resin melt or when a molded resin part is taken out of the mold. As a result, there is a restriction on the position where the compressed gas injecting nozzle can be incorporated.

There is also a restriction on the part into which the compressed gas can be injected, in order to form a gas channel continuously passing through a thick wall section. In addition, the compressed gas shall be injected at a higher pressure than the internal pressure of the injected resin melt. Thus, a high-pressure device and a special molding apparatus including the structure of a mold are required, and it is difficult to control molding conditions including the pressure and flow of the compressed gas.

Japanese Patent Publication 61-9126 discloses a method wherein a resin melt is pressed onto the inner surface of a mold by compressed air injected through a porous member to inhibit the formation of defects such as sink marks on the surface of the resin part in contact with the inner surface of the mold. Japanese Patent Publication 64-2050 discloses another method wherein a porous member for injecting compressed gas in the same way is provided at the corner part of a cavity so that a resin melt is pressed from the inside at the corner to inhibit the formation of sink marks. However, the problems associated with the use of high pressure gas are exhibited by these methods.

When a resin such as polycarbonate or acryl resin, which sets quickly, is injection molded under conditions that permit the surface layer to rapidly cool and solidify, a surface layer forms in contact with the inner surface of the mold. This is strong enough to support the forces caused by Volumetric shrinkage of the resin. Consequently, voids are formed in the thick wall portion of the part without deformation of the surface layer. In this case, sink marks are scarcely formed on the surface of the thick wall portion.

The effect of the void on the formation of sink marks is advantageously utilized in the method disclosed in Japanese Patent Publication 2-13886. In this method, a void control member is provided in a mold at the position corresponding to the inner surface of a resin part where sink marks form easily when the void control member is projected from the inner surface of the mold into the cavity. During injection molding, a void is intentionally formed around the top end of the void control member to inhibit the formation of sink marks.

The void control member disclosed in Japanese Patent Publication 2-13886 is merely projected into the cavity of the mold. In order to form the void around the top end of the void control member with high reproductivity, it is necessary to use a void control member made of a material such as a metal having excellent heat resistance and large heat capacity. In this regard, it is difficult to make the void control member smaller in size, resulting in the restriction on the position where the void control member can be set. In addition, whether voids are formed or not and where voids are formed changes in every lot, therefore effective voids are not formed with high reproductivity, using the void control member. As a result, it is difficult to protect the thick wall portion of the molded resin part as a whole from the formation of sink marks.

An object of the present invention is to offer a molded thermoplastic resin part having thick wall portions remarkably improved in toughness and strength as well as having a superior surface appearance.

Another object of the present invention is to inhibit the formation of defects such as sink marks or deformation derived from the volumetric shrinkage of a resin without any restrictions as mentioned.

Still another object of the present invention is to provide a new injection mold which can be used especially for manufacturing a small-size resin part.

Further another object of the present invention is to provide a void inducing member which can be provided in a mold even at a narrow position.

The present invention provides an injection molding method according to Claim 1, a mold for injection molding according to Claim 6 and a void inducing member according to Claim 8.

In the present invention, a new void inducing member is used. The void inducing member comprises a cylindrical body which has a gas passage axially extending therein and a porous gas discharging part provided at the top end of the cylindrical body. The gas discharging part has a shape whose sectional area is made smaller toward its acute top end. This gas discharging part may be formed unitarily with the cylindrical body or as an independent member to be attached to the cylindrical body.

The void inducing member is statically fixed in a mold at a cavity part corresponding to the thick wall portion of a molded resin part where sink marks can easily form, in a manner such that the gas discharging part extends into the cavity, After the cavity of the mold is filled with a resin melt by full-shot injection, compressed gas is supplied to the cavity through the gas discharging part. The supplied compressed gas breakes through a resin skin layer formed in contact with the top end of the void inducing member and inserts fine gas bubbles serving as a void nucleus into the resin melt near the top end of the void inducing member. As the resin melt is cooled and solidified volumetric shrinkage of the resin occurs. The shrinkage force accompanying the cooling and solidification of the resin promotes the growth of a void from the void nucleus to an extent compensating for the volumetric shrinkage of the resin.

The compressed gas is supplied into the cavity of the mold through the gas discharging part at the top end of the void inducing member, when the internal pressure of the resin melt is lowered in response to the volumetric shrinkage of the resin caused by the cooling and solidification at a part in contact with the inner surface of the mold. The injection of the compressed gas may start at the time when the internal pressure of the resin melt becomes near O. Thus, the resin melt is in a state such that a void will spontaneously form due to a pressure difference, when the internal pressure of the resin melt is reduced. Since the compressed gas is introduced into the resin melt in said state, the formation and growth of the void can be facilitated.

The supply of the compressed gas may be stopped at any time from the period when the Void nucleus is formed in the resin melt to the period before the resin melt looses its fluidity. When the supply of the compressed gas is stopped, the cooling and solidification of the resin melt may be continued under with the interior of the void communicated with the atmosphere. In this case, the void expands while drawing airfrom the atmosphere in an amount corresponding to the volumetric shrinkage of the resin melt derived from its cooling and solidification. Alternatively the supply of the compressed gas may be continued for a while. In this case, the growth of the void is promoted by the gas pressure in the void as well as the shrinkage force of the resin melt.

An injection mold to be used in the method according to the present invention defines a cavity having thick and thin wall sections corresponding to the configuration of a thermoplastic resin part to be manufactured. Agate for injecting a resin melt into the cavity is formed in the mold. One or more void inducing members are statically fixed in the mold at positions defining cavity parts corresponding to the thick wall portions where sink marks easily form, in a manner such that the top end of each void inducing member extends into the cavity.

The void inducing member has a cylindrical body in which a through hole serving as a gas passage extends in the axial direction, and a porous gas dicharg- ing part provided at the top end of the cylindrical body. The gas discharging part has a shape whose sectional area is made smaller toward its acute top end. The other end of the through hole communicates with a compressed gas supply source or with the open atmosphere through a selector valve or check valves provided outside.

The pressure of compressed gas to be applied is 15 kg/cm² G or less, preferably about 5-15 kg/cm² G, which is much lower than that of high-pressure gas used as an auxiliary means in the conventional methods. For instance, the conventional injection molding method disclosed in Japanese Patent Publication 57-14968 uses a high-pressure gas compressed up to 150 kg/cm² G for forming a cavity in the thickwall portion. An air pressure of 10 0 kg/cm2 G or less will be suf- fient in most cases according to the present invention. In this regard, an ordinary gas supply source is usable.

The gas discharging part of the void inducing member may have a blind hole communicating with the gas passage in the cylindrical body. The cylindrical body has a gas-impermeable outer surface to be fixed to the mold. The cylindrical body may be partially projected into the cavity. The cylindrical body may be made of a metal member such as a steel pipe having a through hole.

The gas discharging part to be provided at the top end of the void inducing member may be made of a porous material in which fine open pores of 10µm in average diameter are uniformly distributed. The porous material may be a porous metal, ceramics or heat resistant plastics.

In the case where a porous metal is used for the gas discharging part, the porous metal is preferably shaped by electric discharge machining, electrolytical machining or etching to make its whole surface smooth or to engrave the blind hole. Otherwise, the opened pores would be sealed by the plastic flow of the metal or chips. The porous member as the gas discharging part may be statically fixed to the cylindrical body by screwing, stationary insertion, bayonet joint or the like.

The whole body of the void inducing member may be made of a porous material. In this case, the top part of the porous material is formed to the shape whose sectional area is made smaller toward its acute top end. The outer surface of the porous material except the top part is coated with a gas-impermeable layer formed by plating, vapor depostion or the like, while the pores in the top part are left in a state exposed to the atmosphere. Thus, the gas discharging part is unitarily formed with the cylindrical body.

The other objects and features of the present invention will be apparent from the following description with reference to the drawings attached.
Fig. 1 is a sectional side view of a mold according to the present invention.
Fig. 2 is a sectional view of a void inducing member to be fixed in the mold.
Fig. 3 is a gas discharging member to be provided at the top end of the void inducing member.
Fig. 4 is a sectional view of another void inducing member.
Fig. 5 is a sectional view of a void inducing member incorporated in an extruding sleeve.
Fig. 6 is a perspective view of a molded resin part obtained in Example.

The kind of thermoplastic resin to be used for injection molding according to the present invention is not precisely defined. Any kind of thermoplastic resin such as polystyrene, polypropyrene, ABS, AS, HI, PVC, polycarbonate or polyacryl resin, as well as a mineral or glass reinforced thermoplatic resin, e.g. FRTP may be used.

A resin part having thick and thin wall portions different in thickness which can be injection molded according to the present invention may be a product wherein a main body made of thin wall portions is reinforced with thick wall portions distributed at proper peripheral and inside position, or another product which has bosses for attaching metal fittings or thick outer or inner frames. For instance, housings for electric home appliances, e.g. TV or radio sets, and electronic devices, e.g. facsimiles, word processors or computers, may be manufactured by the injection molding according to the present invention.

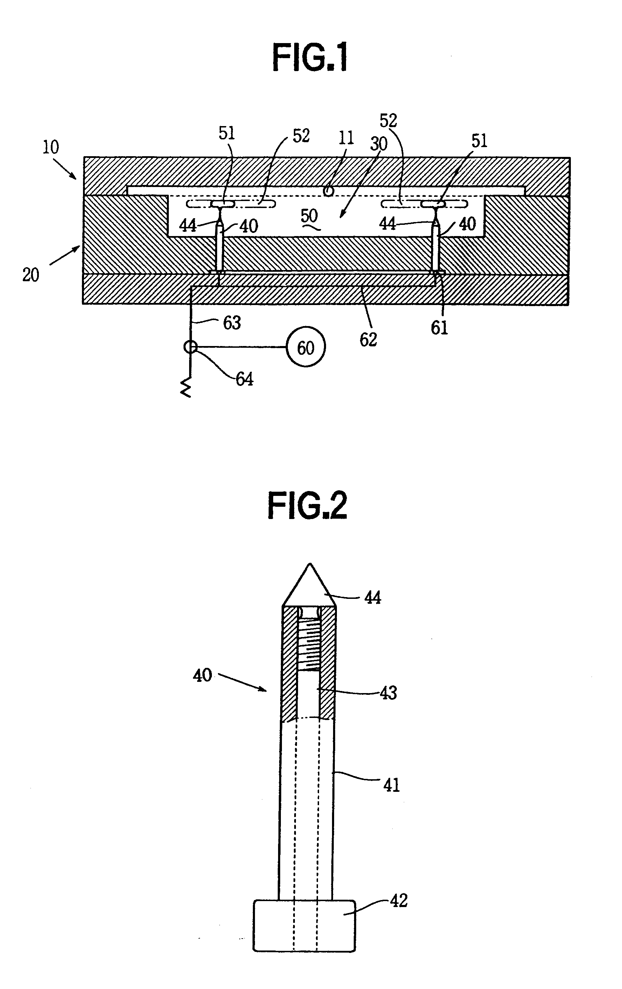

The injection mold according to the present invention has a stationary mold part 10 and a movable mold part 20, as shown in Fig. 1. A cavity 30 corresponding to the profile of a molded resin part is defined between these mold parts 10 and 20. Agate 11 for injecting a resin melt is provided at the stationary mold part 10 or at the junction (parting plane) between the mold parts 10 and 20, and opened to the cavity 30.

One or more void inducing members 40, 40 are provided in the mold at the positions defining cavity parts corresponding to the thick wait portion of a resin part where sink marks form easily, in a manner such that the top end of each void inducing member 40,40 extends into the cavity 30 from the inner surface of the mold. Fig. 1 also schematially illustrates a void nucleus 51 formed in a resin melt 50 injected into the cavity 30 and a void 52 grown from the void nucleus 51.

The position where the injecting gate 11 is to be located is not limited. The injecting gate 11 may be provided at a position defining a cavity part corresponding to the thin wall portion of a resin part. When the injecting gate 11 is provided at such a position, the injected resin melt 50 is preferentially cooled and solidified near the gate 11, so as to inhibit the counter flow of the resin melt 50 into a runner or an injector cylinder. In this sense, a normal open-type injecting nozzle may be advantageously used.

The void inducing member shown in Fig. 2 has a metallic tubular cylindrical body 41. A flange 42 is attached to or unitarily formed at the lower part of the cylindrical body 41. The cylindrical body 41 is made from a pin of approximately 4 mm in diameter, which is commercially available as an extruding pin for a mold, by forming a through hole 43 serving as a gas passage of approximately 2 mm diameter at the center of the pin, and engraving the inner surface of the pin at the top end of the through hole 43 to form a female screw.

A gas discharging part to be provided at the top end of the cylindrical body41 may be eithera member separate from the cylindrical body 41 or unitarily formed with the cylindrical body 41.

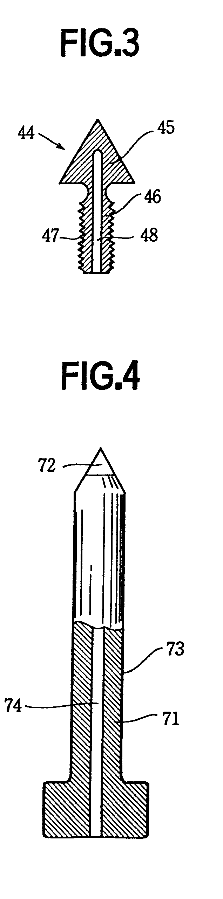

Fig. 2 shows a separate gas discharging member 44 attached to the top end of the cylindrical body 41. The gas discharging member44 is made of a gas-permeable material and having a conical part 45, whose sectional area is made smaller toward its top end, as shown in Fig. 3. The conical part 45 effectively concentrates injected compressed gas at its pointed top to facilitate the formation of the void nucleus 51. In this regard, the gas discharging member 44 may be formed to another shape such as a pyramid or wedge having a sharp gas concentrating tip or edge, instead of the conical part 45.

A columnar shaft or leg 46 extends downwards from the conical part45. Amale screw47, which is engaged with the female screw formed on the inner surface of the cylindrical body 41, is formed on the outer surface of the leg 46. An axially extending blind hole 48 is also formed in the leg 46. The blind passage or hole 48 is connected to the through hole 43 in the cylindrical body, when the gas discharging member 44 is attached to the cylindrical body 41.

The gas discharging member 44 is easily attached to the cylindrical body 41 by engaging the male screw 47 with the female screw of the cylindrical body 41. After the gas discharging member 44 is attached to the cylindrical body 41, the junction or parting plane between the gas discharging member 44 and the cylindrical body 41 is preferably pneumatically (air-tightly) sealed to inhibit the leakage of gas through a gap between the gas discharging member 44 and the cylindrical body 41.

The cylindrical body 41 of the void inducing member40 may be made of various gas-impermeable materials such as metal, inorganic material, heat resistant plastics or ceramics, capable of enduring the condition of exposure to a high-temperature resin melt 50 injected at high pressure without harming the resin.

The gas discharging part 44 to be provided at the top end of the void inducing member40 may be made of a porous material having fine pores capable of inhibiting the inflow of the resin melt. For instance, a sintered metal body, a baked ceramic body or a foamed plastic body, wherein fine pores of 0.03-0.5 mm in diameter are distributed randomly or straight and in parallel with each other. The porous material is formed to a shape, whose sectional area gets smaller toward its sharp top end, e.g., a conical shape as shown in Fig. 3.

The most preferable material for the gas discharging part 44 is a gas-permeable metal mold material wherein fine communicating holes of 10 f..lm or less in average diameter are uniformly distributed throughout the whole body of the material. Such metal mold material may be prepared by a powder metallurgy process, wherein high alloy monofilaments for reinforcement are mixed in high alloy powder, the obtained composition is formed to a desired shape by compressing-sintering or hot-press, and then the sintered body is subjected to a nitriding treatment or conditioning heat treatment.

The metal mold material obtained in this way can be formed to a proper shape by electric discharge machining, electrolytical machining, etching or mechanical machining. In addition, uniform gas permeation is expected all over the whole surface of the material, since the communicating holes are formed anisotropically.

The porous member serving as the gas discharging part 44 may be statically attached to the top end of the cylindrical body 41 by stationary insertion, screwing, bayonet joint or the like.

The whole body of the void inducing member 40 may be made of a gas-permeable material, as shown in Fig. 4. In this case, the top part of a pin body 71 made of the gas-permeable material is shaped so that its cross sectional area gets smaller toward its sharp top end, e.g., a conical part 72.

The surface of the porous material except the conical part 72 is coated with a gas-impermeable layer 73 to seal the openings of the communicating holes in the material, while leaving the communicating holes in the conical part 72 open to the atmosphere. The coating layer 73 may be a metal layer formed by plating, vapor deposition or the like. An axially extending blind hole 74 serving as a gas passage is formed in the pin body 71. The blind hole 74 is closed at the top end near the conical part 72.

When the gas discharging member 44 or the pin body 71 made of the gas-permeable metallic material is machined to form the conical part 45, 72 and the blind hole 48 or the through hole 74, the communicating holes in the material would be undesirably closed by plastic flow or chips. To alleviate this, the material is-. preferably shaped by such a method, such as electric discharge machining, electrolytical maching or etching, which does not cause plastic flow or the formations of chips.

The void inducing member 40 is 2 mm or more in diameter to ensure proper strength, although said defined diamter does not limit the scope of the present invention. The diameter is preferably 2-10mm, more preferably 3-5 mm.

The void inducing member 40 may be provided in the mold using the flange 42, while letting only the gas discharging part 44 extend into the cavity 30. However, the void inducing member 40 is preferably set in the mold in a manner such that a part of the gas-impermeable cylindrical body 41 is projected into the cavity with a length of 1 mm or more, preferably 1-30 mm, from the inner surface of the mold.

The partial projection of the gas-impermeable cylindrical body 41 into the cavity 30 has the advantage that a resin skin layer in contact with the gas-impermeable part is formed at an early stage after the cavity 30 is filled with the resin melt 50. That is, when the metallic cylindrical body41 (shown in Fig. 2) orthe metallic coating layer 73 (shown in Fig. 4) which has excellent thermal conductivity extends into the cavity 30, heat retained in the resin melt 50 is effectively discharged through the cylindrical body41 orthe coating layer 73 so as to accelerate the cooling and solidification of the resin melt 50. The formation of the resin skin layer at the early stage inhibits the deformation of the resin part or the leakage of the resin melt 50 which would be caused by the injection of the compressed gas.

The resin melt 50 in contact with the conical part 45, 72 is affected by the heat extracting power of the void inducing member 40 which becomes smaller toward the top end of the conical part45, 72. so that the formation of the resin skin layer is delayed at the top end of the conical part45, 72. On the other hand, the resin melt 50 in the cavity 30 starts cooling and solidification from its surface side in contact with the inner surface of the mold.

The resin melt 50 volumn shrinks in the progress of cooling and solidification. As a result, the resin melt 50 in the cavity 30 gradually reduces its internal pressure, while being maintained in a molten state. Thus, the conditions suitable for the formation of a void in vacuo are prepared.

Since the compressed gas is supplied into this resin melt 50, it is effectively used for the formation of the void nucleus 51 without diffusing along the boundary between the inner surface of the mold and the resin skin layer. The top end of the void inducing member 40 projected from the inner surface of the mold is not necessarily located at a position corresponding to the center of the thick wall portion, as far as the top end extends to the cavity 30.

The lower part of the void inducing member 40 is coupled to a gas inlet joint 61 including a double-ported air nipple, a spacer, etc.. The inlet joint 61 is led through a gas conduit and a gas channel 62 formed in the mold part 20 to an outisde conduit 63. The outside conduit 63 may be communicated with either a compressed gas supply source 60 or the atmosphere by the operation of the selector valve 64.

Check valves may be provided in each of the conduits to the compressed gas supply source 60 and to the atmosphere, instead of the selector valve 64. In this case, the check valves are operated with a relationship so as to let the through hole 43, 74 selectively communicate with either the gas supply source 60 or the open atmosphere.

The cavity 30 of the mold is filled with the resin melt 50 by full-shot injection. After the injection is completed, the resin melt 50 is optionally dwelled 2-5 sec..

After the resin melt 50 is injected or dwelled, the resin melt 50 is held at a high internal pressure. The part of the resin melt 50 in contact with the inner surface of the mold begins cooling and solidifying, to form a resin skin layer. The resin melt 50 gradually reduces in volume in the process of cooling and solidifying, so that the internal pressure of the resin melt 50 is lowered near approximately 0.

At this moment, the supply of the compressed gas from the gas supply source 60 starts so that the compressed gas is injected into the resin melt 50 through the whole surface of each gas discharging part 44 of one or more void inducing members 40, 40 provided in the mold at the positions defining cavity parts corresponding to the thick wall portions of a resin part. The compressed gas is concentrated at the top end of the conical part 45, 72 owing to the shape of the gas discharging part 44.

On the other hand, the cooling and solidification of the resin melt 50 is delayed near the sharp top end of the void inducing member40, so that the resin skin layer near the sharp top end is thin and easy to break through. For instance, the resin skin layer can be broken through even by a relatively smaller gas pressure below 15 kg/cm² G or less. This is the biggest feature fundamentally different from the formation of a void in the conventional injection molding method wherein a resin melt is pressed onto the inner surface of a mold by the application of a high-pressure gas.

For instance, compressed gas is supplied at a pressure below 15 kg/cm² G which is lower than a pressure for injecting a resin melt, or preferably at a pressure below 10 kg/cm² G which is not a high-pressure.

The supply of compressed gas is not limited to the period when the internal pressure of the resin melt 50 is loitered to 0. Compressed gas may be injected, for instance at the period before the internal pressure becomes 0 or at the period when the internal pressure is negative. As far as the supply of compressed gas starts during the lowering of the internal pressure, the same effect is obtained.

Since the gas pressure is concentrated at the resin skin layer to easily break through, gas bubbles serving as the void nucleus 51 are surely inserted into the resin melt 50 through openings formed in the resin skin layer. The openings formed are small, e.g. of approximately 0.5 mm in diameter, so that they are scarcely distinguished by naked eyes. Consequently, an obtained resin part has an undamaged surface appearance

The pressure balance in the resin melt 50 is destroyed by the formation of the void nucleus 51, and a stress originated in the volumetric shrinkage of the resin melt 50 is accumulated in the void nucleus 51. As a result, the growth of a void 52 starts compensating for the volumetric shrinkage of the resin melt 50 caused by its cooling and solidification.

Once the void nucleus 51 is formed, the supply of the compressed gas from the gas source 60 may be stopped by the operation of the selector valve 64 so as to let the interior of the void 52 communicate with the atmosphere, at a time before the resin melt 50 looses its fluidity. The gas supply is generally stopped at an intermediate time in a cooling step. Of course, the application of the compressed gas may be continued to further dwell the resin melt 50, without releasing the compressed gas to the opened atmosphere in a short period.

When the interior of the void 52 is communicated with the atmosphere by the operation of the selector valve 64 after the cut-off of the gas supply when the internal pressure of the resin melt 50 is reduced as mentioned, the gas remaining in the void 52 is partially used for setting off the degree of decompression corresponding to the volumetric shrinkage of the resin melt 50. The remainder of the gas is discharged to atmosphere. The void 52 spontaneously and continuously grows to a size corresponding to the volumetric shrinkage of the resin melt 50, while inducting air from the atmosphere owing to a shrinkage force derived from the cooling and solidification of the resin melt 50.

In a case where dwell period is continued by the compressed gas, the volumetric shrinkage force of the resin melt 50 serves cooperatively with the dwelling pressure of the compressed gas to promote the growth of the void 52. The continuation of the compressed gas application improves the separability of the resin part from the void inducing member40, too.

The growth of the void 52 develops along the inner direction of the resin melt where the cooling and solidification are delayed, i.e. along a direction parallel to the longitudinal direction of the thick wall portion. The growth of the void is promoted by the shrinkage force of the resin melt 50, and the internal strain which would cause defects such as sink marks and deformation is eliminated. As a result, a resin part having a good surface appearance free from sink marks, deformation and internal strains is obtained, while inhibiting the formation of sink marks not only on the surface of the thickwall portion but also on the surface of a thin wall portion near the thick wall portion or another thick wall portion adjacent to the former thick wall portion.

When injection molding is performed using the mold in which a plurality of void inducing members 40, 40 are provided at positions corresponding to thick wall portions, a void is independently formed at the top end of every void inducing member 40 without forming a gas channel gathering several voids 52, 52 together. Hereby, the obtained resin part does not substantially loose its strength due to big voids formed therein.

A thick wall portion opposite to the inner surface of the mold where the void inducing member40 is provided may be a part, such as a reinforcement rib designed outside or inside a thin wall portion, a boss for attaching metal fittings or an outer or inner frame, of a molded resin product.

A plurality of void inducing members 40 40 may be arranged in adjacent to each other at one or more positions where sink marks would be typically formed. In such a case, a distance between the adjacent void inducing members 40, 40 is determined taking into consideration the effect of each void inducing member 40 which compensates for the volumetric shrinkage of the thick wall portion.

The formation of sink marks is sufficiently inhibited by the void 52, 52 formed near the top end of each void inducing member 40, 40, without the necessity of drawing one void 52 near the other void 52. Consequently, the void inducing members 40, 40 are provided at any arbitrary positions with a high degree of freedom without putting any restrictions on the design of a resin product.

The void inducing member 40 may be installed in combination with an ejector member, e.g. a sleeve pin, a sleeve ejector pin or the like for extruding a molded resin part, which is provided at the part of the mold corresponding to the thick wall portion. Herein, the void inducing member 40 is statically fixed in a state passing through the extruding sleeve, and the top end of the void inducing member 40 is extended into the cavity 30.

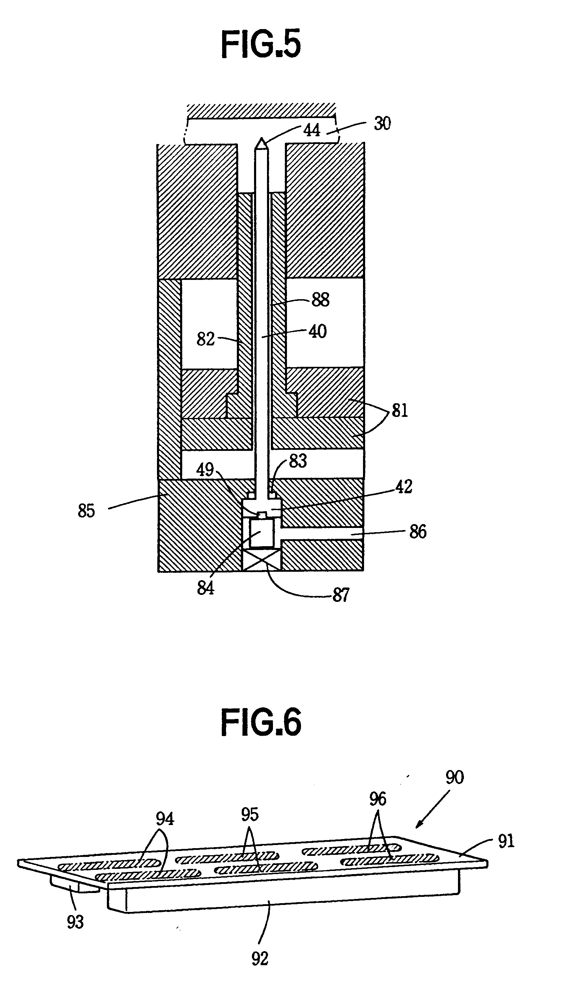

For instance, a hollow extruding sleeve 82 is fixed to an ejector plate 81, as shown in Fig. 5. The void inducing member 40 is inserted into the extruding sleeve 82. The void inducing member 40 passing through the extruding sleeve 82 has a top part including the gas discharging part 44 projected a predetermined length into the cavity 30 from the inner wall surface of the mold. The flange 42 provided at the lower part of the void inducing member 40 is fixed to a mounting plate 85 using an O-ring 83 serving as an air seal and a spacer 84.

Agas introducing channel 49 is formed at the lower part of the void inducing member 40. The gas introducing channel 49 constructs the gas inlet joint 61 (shown in Fig. 1) together with the spacer 84, a plug 87, etc.. Compressed gas supplied from the gas supply source 60 or air absorbed from the open atmosphere is let flow through a gas channel 86 formed in the mounting plate 85, and introduced through the gas discharging part 44 of the void inducing member 40 into the resin melt 50 in the cavity 30.

In the case where the void inducing member 40 is inserted into the extruding sleeve 82, an annular space 88 is formed between the outer surface of the void inducing member40 and the inner surface of the extruding sleeve 82. The annular space 88 may be used as the second gas passage. Hereon, the lower end of the annular space 88 is sealed with an O-ring, while the upper end of the annularspace 88 is opened to form a gas inlet opening at a proper position. The compressed gas from the gas supply source 60 or air from the open atmosphere is introduced through the conduit and flows to the whole surface of the top end of the void inducing member 40.

The gas supply through the annular space 88 makes it easy to separate a molded resin part from the surface of the void inducing member 40. This effect is typical in the case where the molded resin part is taken out of the mold wherein the void inducing member 40 is projected in a large length into the cavity 30.

The void inducing member 40 having the structure shown in Fig. 5 can be provided at a position where a conventional type of void inducing member 40 is difficult to provide. In addition, the void inducing member 40, which has a simple easy to produce structure, also serves as a sleeve ejecting mechanism. Consequently, the mold is offered at a low cost.

After the cooling step is finished, the stationary mold part 10 and the movable mold part 20 are separated to extract the resin part. The resin part obtained in this way has a profile completely complementary to the cavity 30. The resin part, which is free from internal strains, has an excellent surface appearance without the formation of any sink marks. Since a frame of the resin part may be formed by the thick wall portion designed with a high degree of freedom, it is possible to manufacture a resin part improved in toughness and strength which could not be manufactured by any conventional injection molding method.

### EXAMPLES

A molded resin part 90 (shown in Fig. 6) having ribs 92 93 unitarily formed with a flat part 91 was manufactured in Examples undermentioned. A sprue corresponding to the gate 11 for injecting a thermoplastic resin melt was formed at the flat part 91. A product was obtained, after the sprue was cut off the flat part 91.

The flat part 91, corresponding to a thin wall portion, had a rectangular parallelopiped shape of 3 mm in thickness, 80 mm in width and 250 mm in length. The rib 92, corresponding to a thickwall portion, was of 10 mm in width at its lower part, 4 mm in width at its upper part, 18 mm in height from the flat part 91 and 225 mm in length. The other rib 93, corresponding to another thick wall portion, was of 29 mm in width at its lower part, 27 mm in width at its upper part,10 mm in heightfrom the flat part 91 and 225 mm in length.

When the resin part 90 was injection molded using the mold to which the void inducing members were not attached, sink marks 94-96 were apparently formed on the surface of the flat part 91 at the back side of the ribs 92, 93.

In order to examine the effect of the void inducing members 40, 40 on the formation of sink marks, the void inducing members 40, 40 having the structure shown in Fig. 2 were provided in the movable mold part 20 of the injection mold which defined the cavity 30 corresponding to the configulation of the resin part 90, as shown in Fig. 1.

Each void inducing member used in Examples had a cylindrical body 41 of 4 mm in outer diameter, 2 mm in inner diameter and 157 mm in length, and a gas discharging member 44 screwed to the top end of the cylindrical body 41. The gas discharging member 44 was one prepared by shaping a gas-permeable metal-mold material to a cone having an apex angle of 60 degree and a length of 3.4 mm. and forming a blind hole 48 of 0.5 mm in diameter and 11.7 mm in length.

The void inducing members 40, 40 were located at the positions corresponding to the thick wall portions of the resin part 90. The number of the void inducing members 40,40 to be incorporated in the mold and the positions where the void inducing members 40, 40 were inserted into the mold were variously changed to testify the effects of the void inducing members 40, 40 on the formation of sink marks 94-96.

### Example 1:

Two void inducing members 40, 40 were stationarily fixed to the movable mold part 20 at the positions apart in 100 mm from the center of each rib 92, 93 toward both sides. Four void inducing members 40, 40 in total were provided in the mold. Each void inducing member 40 was set in the mold with the relationship that its top end was projected in approximately 12 mm into the cavity 30 from the inner surface of the mold. One end of the through hole 43 in the cylindrical body 41 of each void inducing member 40 was let communicate through a gas channel and the selector valve 64 with the compressed gas supply source 60 outside.

Molten rubber-denatured polystyrene (ESTYR-ENE H-65 made by Nippon Steel Chemical Co., Ltd.) was full-shot injected through the injecting gate 11 into the cavity 30 with an injection pressure of 400 kg/cm² G, and then dwelled 3 sec. at the same pressure. The selector valve 64 was operated so as to let the compressed gas supply source 60 communicate through the outside conduit 63 and the gas channel 62 with each void inducing member 40, 40. Thereby, air at an ambient temperature, compressed at 9.2 kg/cm² G, was supplied to the void inducing members 40,40.

After the gas pressure was applied 10 sec. to the top end of each void inducing member 40,40, the selector valve 64 was operated so as to let the void in- ducving members 40, 40 communicate with the open atmosphere. The resin melt 50 was further cooled in the cavity 30.

After the cooling was continued 20 sec., the molded resin part 90 was taken out of the mold. When the surface of the obtained resin part 90 was observed, defects such as sink marks were not noted at all on the surface of the flat part 91 at the the back side of the ribs 92, 93. A small opening of 0.5 mm in diameter was detected on the surface of each rib 92, 93 at the position corresponding to the top end of each void inducing member 40.

The resin part 90 was cut along a plane perpendicular to the ribs 92, 93 to observe the interior of the resin part 90. There were noted disc-shaped voids 52, 52 each communicating with the small opening. Each void 52 was of a size extending 60 mm from the position of the void inducing member 40 toward the center of the resin part 90 and 10 mm from the position of the void inducing member 40 toward the opposite side. The void 52 was expanded along a direction parallel to the surface of the thick wall portion. The void 52 was smaller as apart from the small opening.

### Example 2:

Voids were formed during injection molding under the same conditions as those in Example 1 using the same mold, but the dwelling step was omitted after the injection. A resin part 90 obtained in this Example did not have any defects such as sink marks on the surface of the flat part 91 at the back side of the ribs 92, 93. The formed voids 52, 52 were expanded 70 mm from the positions of the void inducing members 40, 40 toward the center of the resin part 90 and 10 mm from the positions of the void inducing members 40, 40 toward the opposite side.

### Example 3:

A resin part 90 was injection molded under the same conditions as those in Example 1 using the same mold, but the supply of compressed gas was stopped to two void inducing members 40, 40 corresponding to the rib 93. When the obtained resin part 90 was observed, any defects such as sink marks were not detected at all on the surface of the flat part 91 at the back side of the rib 92. However, some sink marks 94-96 were apparently detected on the surface of the flat part 91 at the back side of the rib 93.

### Example 4:

Injection molding was performed using the same mold as that in Example 1, under the condition that compressed gas was supplied to only one void inducing member40 corresponding to the rib 92 while stopping the gas supply to the other three void inducing members. When an obtained resin part 90 was observed, any defects such as sink marks were not detected on the surface of the flat part 91 at the back side of the rib 92. However, some sink marks 94-96 were apparently detected on the surface of the flat part 91 at the back side of the rib 93.

### Comparative Examaple:

Injection molding was performed using the same mold as that in Example 1, but the supply of compressed gas was stopped to all the four void inducing members 40,40. When an obtained resin part 90 was observed, there were formed small openings at the positions corresponding to the void inducing members 40, 40. However, any voids communicating with the small openings were not detected in the resin part 90. Many sink marks were apparently detected on the surface of the flat part 91 at the back side of the ribs 92, 93. In addition, the configulation of each rib 92, 93 itself was slightly deformed.

According to the present invention as aforementioned, a void communicating through a small opening with the outside is formed in a resin melt during cooling and solidification using one or more void inducing members. The void grows bigger while compensating for the volumetric shrinkage of the resin melt, so that defects such as sink marks caused by the volumetric shrinkage are not formed on the surface of an obtained resin part. Thereby, a product is improved in surface appearance. The internal stress of the resin melt during cooling and solidification is also absorbed in the growing void, resulting in the elimination of internal strains in the resin part. Thus, the resin part is manufactured with high dimensional accuracy. In addition, since a void nucleus is surely formed at the top end of the void inducing member at an arbitrary position corresponding to the thick wall portion of a resin part, high-quality injection molded parts are manufactured with high reproductivity.

The void inducing member has a porous gas discharging part at its top end. The porous gas discharging part inhibits the inflow of a molten resin into the void inducing member, so that the gas permeability of the gas discharging part would not be impeded by clogging pores with the resin. The opposite end of the void inducing member is let communicate with either a compressed gas supply source or the open atmosphere by the operation of a selector valve or a check valve provided in each conduit led to the compressed gas supply source and the open atmosphere. Only by the simplified operation of the selector valve or check valves, compressed gas is concentrately supplied to the top end of the void inducing pin where the formation of a resin skin layer is delayed, without the diffusion of the compressed gas along the boundary between the inner surface of the mold and the resin skin layer. Consequently, the void nucleus is surely formed at the predetermined position. In addition, since the gas discharging part has the shape whose sectional area is made smaller toward its acute top end, it is able to remarkably reduce a gas pressure necessary for the formation of the void nucleus. Thereby, complicated equipment specially arranged for high-pressure gas and troublesome handling are not required.

The void inducing member to be provided in the mold has a unitary body having a gas passage therein. Owing to this constitution, the void inducing member is made smaller in size, so as to be applicable to a small precise part or at a narrow position. Thus, the void inducing member has excellent applicability without any restrictions on the design of the mold, as compared with a conventional method using a reciprocative sliding mechanism such as a cylinder.

## Claims

1. An injection molding method for manufacturing a thermoplastic resin part having thick and thin wall portions, said method comprising the steps of:
providing at least one void inducing member (40) having a gas passage therein and a porous gas discharging part (44) whose sectional area is made smaller toward its acute top end;
fixing said void inducing member (40) to a mold body at a position defining a cavity part corresponding to the thick wall portion of a resin part where sink marks form easily, in a manner such that said gas discharging part (44) is projected into said cavity part,
filling a cavity (30) of the mold with a resin melt by full-shot injection;
supplying compressed gas through said gas discharging part (44) into said cavity part, to breakthrough a resin skin layer formed in contact with the top end of said void inducing member (40) to insert gas bubbles serving as a void nucleus (51) into the resin melt, and
expanding a void (52) from said void nucleus (51) to a size corresponding to the volumetric shrinkage of said resin due to a shrinkage force during the cooling and solidification of said resin melt.

2. An injection molding method according to Claim 1 wherein the gas passage of said void inducing member is communicated with the atmosphere before the resin melt looses its fluidity, while stopping the supply of the compressed gas, to allow a void to expand from said void nucleus to a size corresponding to the volumetric shrinkage of said resin due to shrinkage force during the cooling and solidification of said resin melt.

3. An injection molding method according to Claim 1 or Claim 2, wherein the supply of the compressed gas through the gas discharging pat (44) into the cavity part starts when the internal pressure of the resin melt is reduced in response to volumetric shrinkage during the cooling and solidification of the resin melt.

4. An injection molding method according to and of Claims 1 to 3, wherein the supply of the compressed gas is stopped before the resin melt looses its fluidity.

5. A mold for injection molding a thermoplastic resin part having thick and thin wall portions, comprising:
a mold having a cavity (30) for defining the profile of the thermoplastic resin part,
an injecting gate (11) for injecting a resin melt into said cavity (30),
at least one void inducing member (40) provided in said mold at a position corresponding to a thick wall portion of the thermoplastic resin part, said void inducing member (40) having a gas passage therein and a porous gas discharging part (44) whose sectional area gets smaller toward its sharp top end, in at least said gas discharging part (44) being located in the cavity (30) of the mold, and
a gas conduit having valve means (64) for selectively changing the communication of said gas passage with either a compressed gas supply source (60) or the atmosphere.

6. A mold according to Claim 5, wherein compressed air of 15 kg/cm² or less is provided by the compressed gas supply source (60).

7. A void inducing member to be used in a mold for injection molding a thermoplastic resin part having relatively thick and thin portions comprising
a gas impermeable body (41, 71) to be attached to the mold,
a gas permeable gas discharging member (44, 72) supported on the body (41, 72) and having a cross section which gets smaller towards the top end remote from the body and
a gas passage (43, 74) extending through the body (44, 72) to communicate a supply of gas for discharge through the discharge member (44, 72).

8. A void inducing member according to Claim 7 wherein the gas discharging member (43) is made of a porous material and attached to the body (41) which is made of a cylinder of an impermeable material having a through hole (43) formed therein to provide the gas passage.

9. A void inducing member according to Claim 8 wherein the gas discharging member (44) is attached to the top of the body (41) by a screw fitting.

10. A void inducing member according to Claim 7 wherein the body (71) and the gas discharging member (72) are unitarily formed of a porous material, said body (71) being coated with an impermeable layer (73).

11. A void inducing member according to any one of Claims 7 to 10 wherein the gas discharging member (44, 72) has pores of an average diameter of 10um or less uniformly distributed therethrough.
